# EUROPÄISCHE PATENTSCHRIFT

(11) **EP 1 181 144 B1**
(45) Veröffentlichungstag und Bekanntmachung des Hinweises auf die Patenterteilung: **07.01.2004**
(21) Anmeldenummer: 99929140.4
(22) Anmeldetag: 02.06.1999
(51) Int. Cl.: B29C 45/14, A46D 3/00

(54) **VERFAHREN UND VORRICHTUNG ZUR HERSTELLUNG VON BÜRSTEN**
METHOD AND DEVICE FOR PRODUCING BRUSHES
PROCEDE ET DISPOSITIF POUR LA FABRICATION DE BROSSES

(43) Veröffentlichungstag der Anmeldung: 27.02.2002
(73) Patentinhaber: M + C Schiffer GmbH, 53577 Neustadt-Wied (DE)
(72) Erfinder: BUCHHOLZ, Erwin, D-53567 Asbach (DE)
(74) Vertreter: Grünecker, Kinkeldey, Stockmair & Schwanhäusser Anwaltssozietät
(86) Internationale Anmeldenummer: PCT/EP1999/003873
(87) Internationale Veröffentlichungsnummer: WO 2000/074917

(56) Entgegenhaltungen:
- EP-A- 0 142 885
- EP-A- 0 676 268
- EP-A- 0 681 798

## Beschreibung

Die vorliegende Erfindung betrifft ein Verfahren und eine Vorrichtung zur Herstellung von Bürsten.

Aus der DE-PS 845 933 ist ein Verfahren zur Herstellung von Bürsten, insbesondere Zahnbürsten in einem Formwerkzeug bekannt. Bei dem vorbekannten Verfahren werden aus mehreren Borstenfilamenten zusammengesetzte Borstenbündel in Kanäle eingeführt, die an einem Formwerkzeugteil einer Spritzgußform ausgebildet sind. Die befestigungsseitigen Enden der Borstenbündel werden zur Ausbildung einer Verdickung angeschmolzen. Hierzu wird eine heiße Platte gegen die befestigungsseitigen Enden der Borstenbündel angelegt, die unter Ausbildung einer den Durchmesser des Borstenbündels überragenden Verdickung anschmelzen. Danach wird das Formnest geschlossen und thermoplastische Masse in fließfähigem Zustand in das Formwerkzeug eingespritzt. Die Verdickung wird bei diesem vorbekannten Verfahren mit Abstand zu der Kanalmündung in dem aus der thermoplastischen Masse gebildeten Bürstenkörper eingebettet.

Weiterentwicklungen an dem gattungsbildenden Verfahren waren auf die Abdichtung der Kanäle während der Formfüllung fokussiert. So wurden mit der DE-A-38 32 520 besondere Abdichtmaßnahmen vorgeschlagen, mit denen die Borstenbündel bei mit Abstand zu der Kanalmündung angeordneter Verdickung gegen die Kanalwandung abgedichtet wurden. Gemäß der Offenbarung der DE-C-35 11 528 ist es zu bevorzugen die Kanäle durch Anlegen der Verdickung an die Kanäle abzudichten.

Neben der Abdichtung der Kanäle bei der Formfüllung spielt die Einbettungstiefe der Verdickung in dem Bürstenkörper, d.h. der Abstand der Verdickung zu der Oberfläche des Bürstenkörpers, eine wesentliche Rolle Liegt die Verdickung unmittelbar an der Oberfläche des Bürstenkörpers EP-A-0 142 885, so weisen die Borstenbündel eine geringe Auszugsfestigkeit auf. Dementsprechend wurde mit der DE-C-36 42 124 ein gattungsbildendes Verfahren vorgeschlagen, bei dem die Kanäle durch eine in den Formraum hineinragende Hülse verlängert wurden, um einerseits den Kanal durch die an der Hülse anliegende Verdickung abzudichten, andererseits jedoch die Verdickung mit Abstand zu der Oberfläche des Bürstenkörpers anzuordnen.

Dem Fachmann sind also eine Mehrzahl von gattungsbildenden Verfahren bekannt, bei denen die Verdickung mit unterschiedlichem Abstand zu der Oberfläche des Bürstenkörpers angeordnet wird.

Mit der EP-B-0 759 711 wird ein gattungsbildendes Verfahren vorgeschlagen, bei dem die Verdickung derart von der Kanalmündung beabstandet wird, daß beim nachfolgenden Einfüllen thermoplastischer Masse in das Spritzgießwerkzeug ein beim Aufschmelzen der befestigungsseitigen Enden erzeugter, die Verdickung überragender thermisch geschwächter Längenbereich der Kunststoffmonofile von der Kunststoffschmelze umschlossen wird. Nach der Offenbarung dieses Standes der Technik wird der zwischen der Verdickung und der Mündung angeordnete geschwächte Längenbereich der Borstenbündel vollständig von der erstarrten Kunststoffmasse des Bürstenkörpers umgeben, um eine möglichst hohe Biegeelastizität und ein gutes Wiederaufrichtvermögen der Borstenbündel zu erzielen. Dieses Verfahren weist jedoch den Nachteil auf, daß die Verdickung mit Abstand zu der Mündung des Kanals bzw. einer den Kanal verlängernden Hülse angeordnet sein muß, wobei zur Bestimmung des Abstandes der thermisch geschwächte Längenbereich aufwändig ermittelt werden muß.

Die EP-A-0 676 268 kombiniert die aus der EP 0 142 885 und der EP 759 711 bekannten Lösungsvorschläge, indem zunächst beim Einfüllen der fließfähigen thermoplastischen Masse die Verdickung die Kanäle mündungsseitig abdichtet. Die einzelnen, in den Kanälen gehaltenen Filamente werden vor der Erstarrung der thermoplastischen Masse axial verschoben, so dass diese mit größerem Abstand zu der Oberfläche des Bürstenkörpers in dem thermoplastischen Material eingesiegelt werden. Dieses aus dem Stand der Technik bekannte Verfahren erfordert einen komplexen Werkzeugaufbau und macht darüber hinaus eine exakte Steuerung des Prozesses erforderlich, um die Borstenbündel in den Kanälen nach dem Einspritzen jedoch vor einer allzu großen Erstarrung des thermoplastischen Materials axial zu verschieben.

Schließlich ist aus der EP-A-0 681 798 ein gattungsbildendes Verfahren und eine Vorrichtung zur Durchführung desselben bekannt. Bei dieser vorbekannten Vorrichtung weist das Formwerkzeug mit wenigstens zwei Formwerkzeugteilen, die wechselseitig zur Komplettierung des Formwerkzeuges in dasselbe eingesetzt werden. Die Formwerkzeugteile weisen Kanäle zum Halten von Borstenbündeln auf. Während eines der vom Werkzeugteile in das Formwerkzeug eingesetzt ist und beim Einfüllen thermoplastischer Masse die Borstenbündel hält, wird das andere Formwerkzeugteil an einer Vorbereitungsstation mit Borstenbündeln für den nächsten Spritzgusszyklus gefüllt, die befestigungsseitig durch die Aufschlagung mit heißer Luft zur Ausbildung einer Verdickung angeschmolzen werden. Die derart vorbereiteten Borstenbündel sind nach Einbau des Formwerkzeugteiles in das Werkzeug mit ihren befestigungsseitigen Enden in einer Kavität aufgenommen, die in dem Spritzgusszyklus zur Ausbildung eines die Borstenbündel haltenden Bürstenkörpers mit einem Thermoplasten gefüllt wird.

Der vorliegenden Erfindung liegt die Aufgabe zugrunde, das gattungsbildende Verfahren zu verbessern und insbesondere ein Verfahren anzugeben, mit dem Bürsten, deren Borstenbündel eine gute Biegeelastizität und ein gutes Wiederaufrichtvermögen unabhängig von der Einbettungstiefe der Verdickung haben, herstellbar sind. Gemäß einem weiteren Aspekt liegt der vorliegenden Erfindung die Aufgabe zugrunde, eine zur Durchführung des Verfahrens geeignete Vorrichtung anzugeben.

Zur verfahrensmäßigen Lösung der obigen Aufgabe wird gemäß einem ersten Aspekt der vorliegenden Erfindung vorgeschlagen, daß ein beim Anschmelzen des Borstenbündels entstehender geschwächter Längenbereich der Borstenfilamente vollständig von der Verdickung umgeben wird.

Bei diesem ersten Aspekt der vorliegenden Erfindung wird das Anschmelzen der befestigungsseitigen Enden des bzw. der Borstenbündel derart vorgenommen, daß die beim Anschmelzen entstehende Schmelze die nicht aufgeschmolzenen Borstenfilamente in deren Längsrichtung teilweise umgibt, und zwar so weit, daß der durch thermischen Einfluß verursachte geschwächte Längenbereich sämtlicher Borstenfilamente von der Verdickung umgeben wird. Praktische Versuche haben gezeigt, daß stirnseitig an dem Borstenbündel erzeugte Schmelze über den Umfang des nicht angeschmolzenen Borstenbündels gebracht werden kann, ohne daß sich in Längsrichtung der Borstenfilamente hinter der Schmelzfront eine durch thermischen Einfluß erzeugte Reorientierung der Molekülketten der gereckten Filamente ergibt.

Mit dem ersten Aspekt der vorliegenden Erfindung werden somit an ihrem befestigungsseitigen Ende eine Verdickung aufweisende Borstenbündel hergestellt, die keinen über die Verdickung hinausgehenden thermisch geschwächten Längenbereich haben. Die Beborstung der hergestellten Bürste weist somit unabhängig von der Einbettungstiefe der Verdickung in dem Bürstenkörper eine gute Biegeelastizität und ein gutes Wiederaufrichtvermögen auf.

Gemäß einem weiteren Aspekt wird zur Lösung der obigen Teilaufgabe mit der vorliegenden Erfindung das gattungsbildende Verfahren dahingehend weitergebildet, daß zum Ausbilden der Verdickung heißes Gas verwendet wird.

Gegenüber dem aus dem Stand der Technik bekannten, gegen die befestigungsseitigen Enden der Borstenbündet gelegten heißen Messer kann bei der Ausbildung der Verdikkung durch heiße Luft das Verfahren besonders wirtschaftlich ausgeführt werden. Bei dem erfindungsgemäßen Verfahren werden die befestigungsseitigen Borstenbündel berührungsfrei angeschmolzen, was zu einer zu bevorzugenden kugelförmigen Ausbildung der Verdickung führt und eine geringe Klemmkraft erforderlich macht, mit der die Borstenfilamente in den Kanälen gehalten werden. Weiterhin läßt sich die auf das befestigungsseitige Ende aufgebrachte Wärmemenge bei der Verwendung eines heißen Gases besser regeln als bei der Verwendung eines heißen Messers, dessen Temperatur sich aufgrund von relativ trägen Wärmeleitvorgängen einstellt. Durch die Verwendung heißen Gases wird darüber hinaus die Möglichkeit geschaffen, die Ausbreitungsrichtung der Schmelze über die Ausrichtung des Gasstrahles zu beeinflussen.

Im Hinblick auf die optischen Qualitäten der Bürste, insbesondere beim transparentem Material des Bürstenkörpers ist es weiterhin zu bevorzugen, als Gas ein Inertgas zu verwenden.

Die Ausbreitungsrichtung der Schmelze kann besonders gut mit kleinen Düsen beeinflußt werden. Als kleine Düse ist eine Düse anzusehen, deren Austrittsquerschnitt 2 bis 20, vorzugsweise 5 bis 10 mal so groß wie der Querschnitt des angestrahlten Borstenbündels ist.

Im Hinblick auf eine vollständige Einbettung des thermisch geschwächten Längenbereiches ist es zu bevorzugen, das heiße Gas gegen die Stirnseite des Borstenbündels zu blasen. Auf der Stirnseite des Borstenbündels entstehende Schmelze wird bei einem derartigen bevorzugten Verfahren von der anströmenden Luft zunächst, bezogen auf das Borstenbündel, radial nach außen gedrückt und dann in Längsrichtung teilweise über das Borstenbündel geschoben.

Bei einer bevorzugten Ausgestaltung des erfindungsgemäßen Verfahrens wird das befestigungsseitige Ende des Borstenbündels mit Abstand zu dem Formwerkzeugteil angeordnet, die Verdickung jedoch ohne Abstand zu dem Kanal ausgebildet. Die Fließfront der Verdickung erstarrt bei dieser bevorzugten Ausführungsform an der Mündung des Kanales. Hier werden die Borstenbündel in dem Kanal gehalten, d.h. die Borstenfilamente liegen an dem relativ kalten Formwerkzeugteil an. Die mit der an dem Borstenbündel herablaufenden Schmelze in direkten Kontakt kommenden äußeren Borstenfilamente werden von dem Formwerkzeugteil gekühlt. Hierdurch wird einen Erwärmung der die Verdickung überragenden Filamente auf eine kritische Temperatur, bei der eine thermisch verursachte Schwächung zu befürchten ist, vermieden. Es hat sich gezeigt, daß eine derartige kritische Temperatur insbesondere bei gereckten Filamenten aus Polyamid im wesentlichen gleich der Schmelztemperatur ist.

Bei einer weiteren bevorzugten Ausgestaltung der vorliegenden Erfindung wird die die Verdickung bildende Schmelze gegen das Formwerkzeugteil angelegt. Im Anschluß daran und vor dem Einfüllen der fließfähigen Masse in das Formwerkzeug wird das die Verdickung aufweisende Borstenbündel vorzugsweise axial verschoben, d.h. mit Abstand von der Oberfläche des Formwerkzeugteiles und somit der Mündung des Kanales angeordnet, um eine möglichst gute Auszugsfestigkeit zu erzielen.

Im Hinblick auf eine wirtschaftliche Durchführung des Verfahrens ist es zu bevorzugen, das Formwerkzeugteil zur Ausbildung der Verdickung an einer Heißgas abströmenden Blasvorrichtung vorbeizuführen und das Formwerkzeugteil zur Ergänzung des Formwerkzeugs dichtend in dieses einzubauen. Bei dieser Verfahrensführung wird das Formwerkzeugteil und damit die Ausbildung der Verdickung von dem Formwerkzeug entkoppelt, d.h. der Formfüllzyklus ist unabhängig von der Vorbereitung der Borstenbündel (Einführen der Borstenfilamente in die Kanäle des Formwerkzeugteiles, Ausbilden der Verdickung, gegebenenfalls axiales Verschieben).

Bei einer weiteren bevorzugten Ausgestaltung der vorliegenden Erfindung wird das Formwerkzeugteil auf dem Weg zu oder von dem Formwerkzeug gekühlt. Eine derartige Kühlung ist insbesondere in Kombination mit dem Ausbilden der Verdickung ohne Abstand zu dem Kanal und/oder dem Ausbilden der Verdickung durch Anlegen der Schmelze gegen das Formwerkzeugteil im Hinblick auf eine möglichst effektive Kühlung der an dem äußeren Umfang des Borstenbündels angeordneten Borstenfilamente zu bevorzugen.

Zur vorrichtungsmäßigen Lösung der obigen Aufgabe wird mit der Erfindung eine gattungsbildende Vorrichtung zur Herstellung von Bürsten, insbesondere Zahnbürsten mit einem mehrteiligen Formwerkzeug, einer mit dem Formwerkzeug kommunizierenden Formfülleinrichtung und einer dem die Borstenbündel haltenden Formwerkzeug zugeordneten Heizeinrichtung derart weitergebildet, daß die Heizeinrichtung zumindest eine auf das Formwerkzeugteil gerichtete Heißgasdüse umfaßt.

Eine derartige Vorrichtung kann hinsichtlich des Wärmeeintrags an den befestigunsseitigen Enden der Borstenbündel genau und bei kurzer Reaktionszeit gesteuert werden. Die Nachteile einer von trägen Wärmeleitvorgängen bestimmten Regelung eines beheizten Messers sind damit behoben.

Weitere Einzelheiten, Merkmale und Vorteile der vorliegenden Erfindung ergeben sich aus der nachfolgenden Beschreibung mehrere Ausführungsbeispiele. In dieser zeigen:
- Figuren 1 bis 3: die wesentlichen Schritte eines Ausführungsbeispiels eines erfindungsgemäßen Herstellungsverfahrens,
- Figur 4: eine schematische Schnittansicht einer ausgebildeten Verdickung,
- Figur 5: eine photographische Schnittansicht durch eine nach dem erfindungsgemäßen Verfahren hergestellte Verdickung,
- Figur 6: ein DSC-Diagramm für Polyamid-Borstenfilamente,
- Figur 7: eine rasterelektronenmikroskopische Ansicht einer Verdickung und
- Figur 8 und 9: ein Ausführungsbeispiel einer Heizeinrichtung.

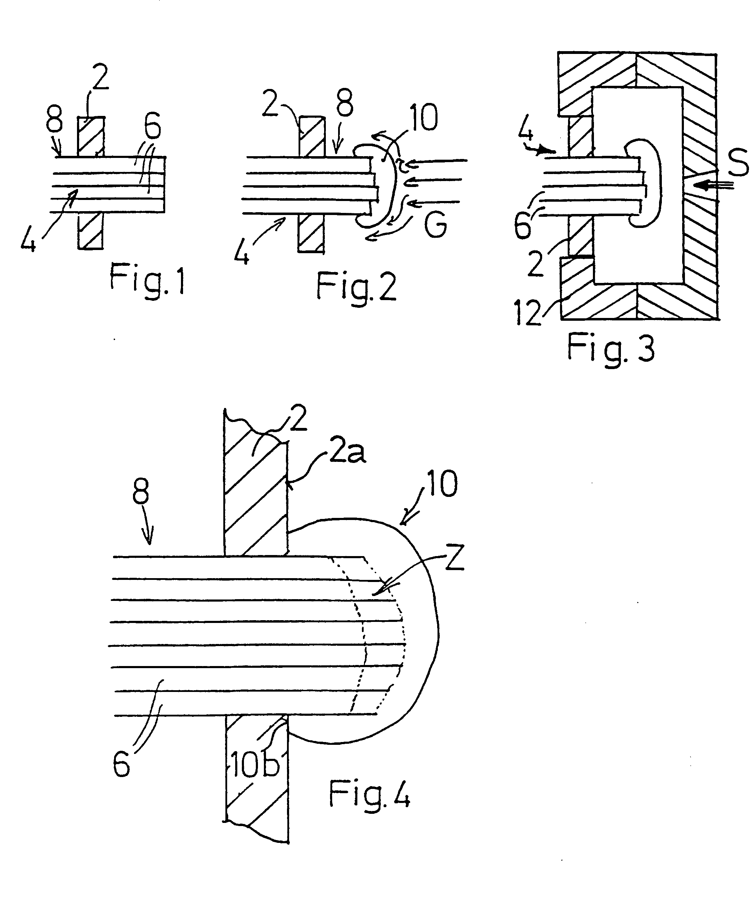

In den Figuren 1 bis 3 sind beispielhaft die wesentlichen Schritte eines Verfahrens zur Herstellung von Bürsten hier am Beispiel von Zahnbürsten dargestellt. Ein Formwerkzeugteil, das vorliegend als Lochfeldplatte 2 ausgebildet ist, deren Kanäle 4 in einem Lochmuster angeordnet sind, welches der herzustellenden Beborstung entspricht, wird mit Borstenfilamenten 6 bestückt. Die Borstenfilamente 6 werden dabei soweit in den Kanal hineingeschoben, daß sämtliche Borstenfilamente 6 eines Borstenbündels 8 mit ihren befestigungsseitigen Enden mit Abstand zu der Lochfeldplatte 2 angeordnet sind.

Wie in Figur 2 dargestellt, wird durch Aufblasen eines heißen Inertgases G auf die Stirnseite des durch die Borstenfilamente 6 gebildeten Borstenbündels 8 eine Verdickung 10 ausgebildet. Figur 2 zeigt die noch nicht vollständig ausgebildete Verdickung 10. Wie schematisch angedeutet, trifft das heiße Inertgas G auf die Stirnseite des Borstenbündels und schmilzt dort das Material der Borstenfilamente 6 an. Die sich bildende Schmelze wird bezogen auf das Borstenbündel 8 radial nach außen und längs der Borstenfilamente 6 durch das strömende Gas G getrieben. Es bildet sich eine Schmelzfront aus, die sich auf der äußeren Umfangsfläche des Borstenbündels 8 in Richtung auf die Lochfeldplatte 2 zu bewegt. Bei dem gezeigten Ausführungsbeispiel wird die Ausbildung der Verdickung dann gestoppt, wenn die Schmelzfront sich gegen die kalte Lochfeldplatte 10 anlegt und dort unmittelbar erstarrt. Danach werden in einem nicht gezeigten Verfahrensschritt die eine Verdickung 10 aufweisenden Borstenfilamente 6 axial verschoben, so daß die Verdickung 10 jeweils mit Abstand zu der Mündung des Kanales 4 angeordnet wird. Dieser Abstand kann beliebig gewählt werden.

Danach wird die Lochfeldplatte 2 zur Komplettierung eines Formwerkzeuges 12, welches in Figur 3 dargestellt ist, in dieses eingebaut. Durch eine mit dem Formwerkzeug kommunizierende Formfülleinrichtung, die vorliegend durch eine Spritzgießmaschine gebildet ist, wird Schmelze S in das Formnest des Werkzeuges 2, 12 eingespritzt. Die thermoplastische Masse erstarrt zu einem Bürstenkörper, in dem die Verdickung 10 mit Abstand zu der von den Bostenbündeln 8 durchragten Oberfläche des Bürstenkörpers angeordnet ist.

In Figur 4 ist eine schematische Schnittansicht einer nach dem Verfahren hergestellten Verdickung nach Beendigung des in Figur 2 gezeigten Verfahrensschrittes dargestellt. Wie ersichtlich, hat sich die Schmelzefront der Verdickung 10 gegen die Lochfeldplatte 2 angelegt. Dementsprechend weist die Verdickung eine von den Borstenfilamenten 6 durchragte Ringfläche 10b auf, die parallel zu der den Kanal 4 begrenzenden Oberfläche 2a der Lochfeldplatte 2 verläuft. Die Verdickung 10 umschließt die Borstenfilamente 6 derart, daß die befestigungsseitigen Enden der Borstenfilamente 4 weiterhin mit Abstand zu der Öffnung des Kanales 4 angeordnet sind. An den befestigungsseitigen Enden der Borstenfilamente 6 ist eine sichelförmige Zone Z eingezeichnet. Diese Zone Z umfaßt den Längenbereich der Borstenfilamente 6, der aufgrund der thermischen Beanspruchung beim Anschmelzen der Verdickung 10 eine Schwächung erfährt. In diesem Bereich sind die Molekülketten nicht mehr in Längsrichtung der Filamente 6 orientiert.

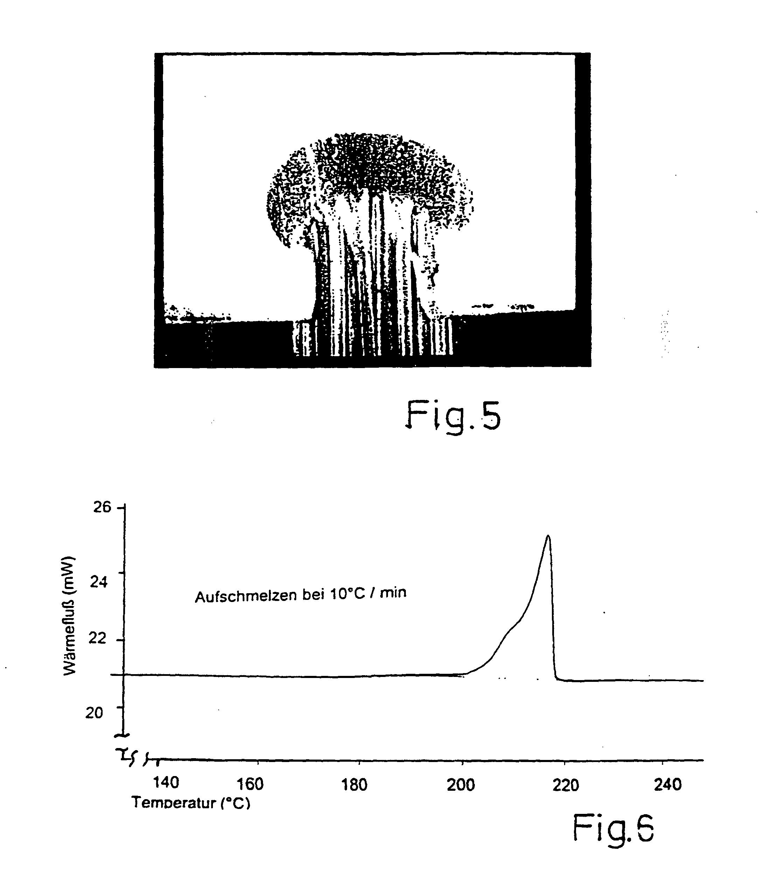

In Figur 5 ist eine photographische Schnittansicht einer nach dem erfindungsgemäßen Verfahren hergestellten Verdickung gezeigt. Diese Schnittansicht läßt die Zone Z, die den thermisch geschwächten Längenbereich der Borstenfilamente umfaßt, deutlich erkennen. Wie bereits vorstehend unter Bezugnahme auf Figur 4 dargelegt worden ist, hat die Zone Z eine sichelförmige Form, d.h. diejenigen Borstenfilamente mit dem längsten thermisch geschwächten Längenbereich sind mittig in dem Borstenbündel angeordnet, wohingegen diejenigen Borsten filamente mit dem kürzesten Längenbereich thermischer Schwächung an der Umfangsfläche des Borstenbündels liegen. Die Zone Z ist konvex geformt und unterscheidet sich somit von einer konkav geformten, den thermisch geschwächten Längenbereich der Borstenfilamente eines Bündels umfassenden Zone, wie er sich bei der konventionellen Ausbildung der Verdickung mittels einer heißen Platte einstellt. Die heiße Platte wird entweder berührend gegen die befestigungsseitigen Enden der Filamente gelegt, oder aber mit Abstand zu diesen gehalten. Aufgrund der Kontakt- oder Strahlungswärme wird das befestigungsseitige Ende angeschmolzen. Die auf der Umfangsfläche des Borstenbündels angeordneten Filamente werden von der Umgebungsluft stärker gekühlt, als die im Kern des Bündels liegenden Filamente. Demnach stellt sich in der Mitte des Borstenbündels eine höhere Temperatur als an der Umfangsfläche des Bündels ein, was zu der Ausbildung einer konkav geformten Zone Z führt.

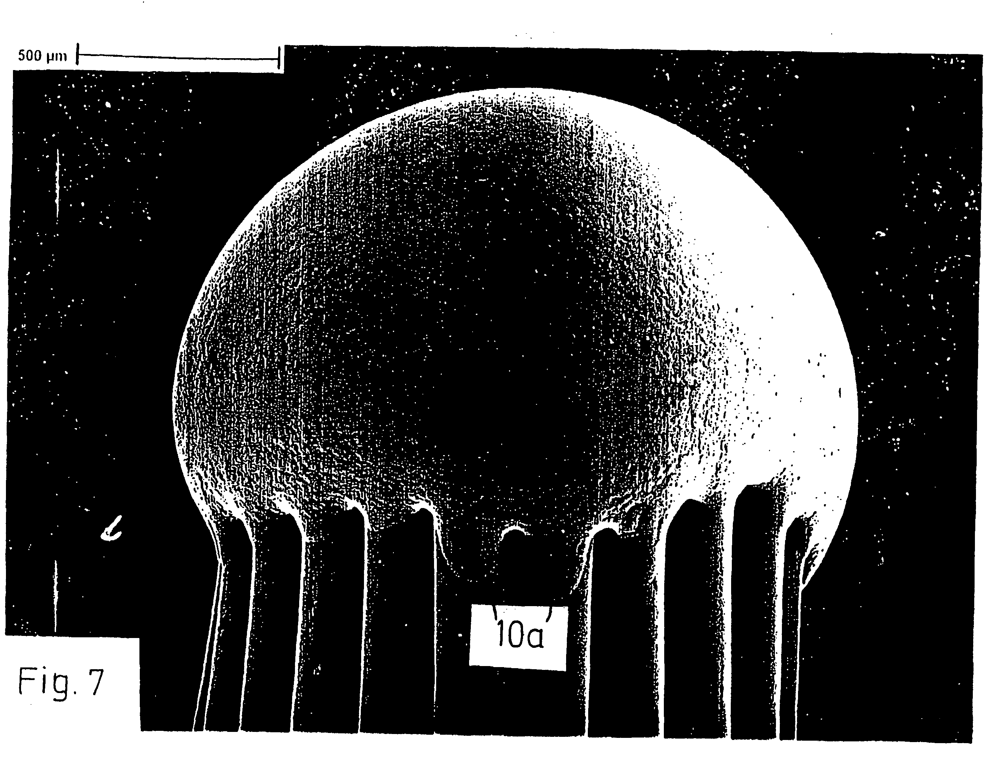

Wie sich anhand von DSC-Untersuchungen nach ISO 3146, von denen ein typisches Versuchsergebnis in Figur 6 gezeigt ist, nachweisen läßt, erfahren die an der äußeren Umfangsfläche des Borstenbündels angeordneten Borstenfilamente im Bereich der erstarrenden Schmelzefront der Verdickung keine Schwächung durch thermisch induzierte Reorientierung der Moleküle. Eine thermische Reorientierung bei einer Temperatur unterhalb der Schmelzetemperatur würde sich in einem DSC-Diagramm aufgrund der Reibung der Molekülketten gegeneinander bei einer Veränderung ihrer Lage als exothermer Ausschlag zeigen. Genau unterhalb der Schmelzetemperatur kann jedoch bei dem DSC-Diagramm gemäß Figur 6 kein exothermer Ausschlag festgestellt werden. Tatsächlich zeigt das Diagramm lediglich einen endothermen Ausschlag. Dieser markiert das Aufschmelzen der Filamente bei ca. 200°C. Die sich etwa mit Schmelzetemperatur über die äußere Umfangsfläche des Borstenbündels schiebende Schmelzefront kann kurz vor ihrer Erstarrung die auf der Umfangsfläche angeordneten Filamente nicht anschmelzen. Demnach befinden sich - wie nachfolgend unter Bezugnahme auf Figur 7 ausführlicher erläutert wird - unterhalb der Schmelzfront, d.h. radial innerhalb der Verdickung, Borstenfilamente die nicht angeschmolzen sind und deren Molekülketten keine thermische Reorientierung aufweisen.

Das Formen der Verdickung gegen das Werkzeugteil, hier die Lochfeldplatte, derart, daß die Schmelzefront unmittelbar vor der Lochfeldplatte zur Erstarrung gelangt oder aber die Lochfeldplatte nur ein wenig berührt, ist insofern zu bevorzugen, da die gekühlte Lochfeldplatte insbesondere die an der Umfangsfläche des Borstenbündels angeordneten Filamente kühlt. Diese äußeren Borstenfilamente stehen in direktem Kontakt mit der Lochfeldplatte. Aufgrund der kalten Lochfeldplatte kann somit einerseits ein definiertes Erstarren der vorrückenden Schmelzefront erzielt werden. Die von der Lochfeldplatte abgegebene Kältestrahlung führt zum Einfrieren der Fließfront. Zum anderen verhindert die verhältnismäßig kalte Lochfeldplatte ein Aufschmelzen der Borstenbündel in radialer Richtung unmittelbar unterhalb der erstarrenden Schmelzefront. Dieser beschriebene kombinatorische Effekt läßt sich nur dann erzielen, wenn die Verdickung gegen die Lochfeldplatte geformt wird und die vorrückende Schmelzefront im wesentlichen ohne Abstand zu dem Formwerkzeugteil, hier der Lochfeldplatte, erstarrt.

In Figur 7 ist eine rasterelektronenmikroskopische Ansicht eines isolierten Borstenbündels mit einer Verdickung gezeigt, die durch Beaufschlagen mit Heißgas ausgebildet worden ist. Im Gegensatz zu den in den Figuren 1 bis 4 dargestellten Verfahren hat die sich bildende Schmelze der Verdickung keinen direkten Kontakt mit dem Formwerkzeugteil gehabt. Vielmehr ist die Verdickung zwar ohne Abstand zu dem Kanal ausgebildet worden, ohne jedoch das Formwerkzeugteil direkt zu berühren. Bei einer derartigen Verfahrensführung werden die Parameter der Heißgasbeaufschlagung derart eingestellt, daß die auf das Formwerkzeugteil vorrückende Schmelzefront aufgrund der von dem Formwerkzeugteil abgegebenen Kältestrahlung im wesentlichen ohne Abstand zu dem Formwerkzeugteil erstarrt. Als im wesentlichen ohne Abstand zu dem Formwerkzeugteil wird noch ein Abstand bis zu 300 µm angesehen.

Wie in Figur 7 deutlich zu erkennen, zeichnet sich die mittels Heißgasbeaufschlagung hergestellte Verdickung durch eine sphärische Oberfläche aus. Da die Verdickung berührungsfrei hergestellt wird, d.h. kein heißer Gegenstand gegen die Verdickung zu deren Ausbildung angelegt wird, ist die Oberfläche der Verdickung störungsfrei, weist also keine Absätze, Kanten oder dgl. auf. Die sphärische, störungsfreie Oberfläche der Verdikkung bewirkt eine bevorzugte Einbettung der Verdickung in den Bürstenkörper, da die bei einem Spritzgußverfahren unter Druck erstarrende fließfähige Masse in einem hydrostatischen Spannungszustand an die Verdickung angelegt wird. Hierdurch wird der Zusammenhalt der in dem Borstenbündel zusammengefaßten Borstenfilamente verbessert und ein blumenstraußartiges Auseinanderfächem der Borstenfilamente eines Borstenbündels, wie es aus dem Stand der Technik beispielsweise bei der Anordnung einer Verdickung ohne Abstand der Oberfläche des Bürstenkörpers bekannt ist, vermieden.

In Figur 7 ist weiterhin deutlich zu erkennen, daß die Verdickung zu den nutzungsseitigen Enden der Borstenfilamente Lippen 10a aufweist, die sich teilweise über die äußere Umfangsfläche derjenigen Borstenfilamte erstrecken, die auf der äußeren Umfangsfläche des Borstenbündels angeordnet sind. Diese zu der Verdickung gehörigen Lippen 10a decken mitunter noch eine gewisse Teillänge des thermisch geschwächten Bereiches ab. Die Lippen überziehen die äußere Umfangsfläche der jeweiligen Filamente jedoch mit einer Temperatur, die sehr dicht an der Schmelztemperatur der Borstenfilamte liegt. Wie vorstehend unter Bezug auf Fig. 6 dargelegt worden ist, konnte nachgewiesen werden, daß die Wärmebeeinflussung durch die Lippen keine thermische Schädigung der Borstenfilamente bewirkt. So zeigt sich unmittelbar im Anschluß an die Lippen bei den äußeren Borstenfilamenten kein thermisch geschwächter Längenbereich (vgl. Fig. 5).

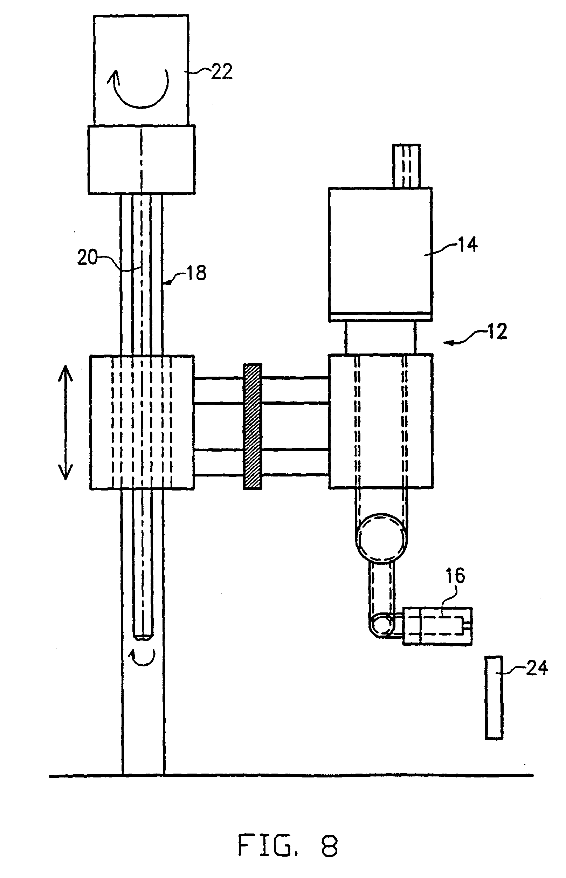

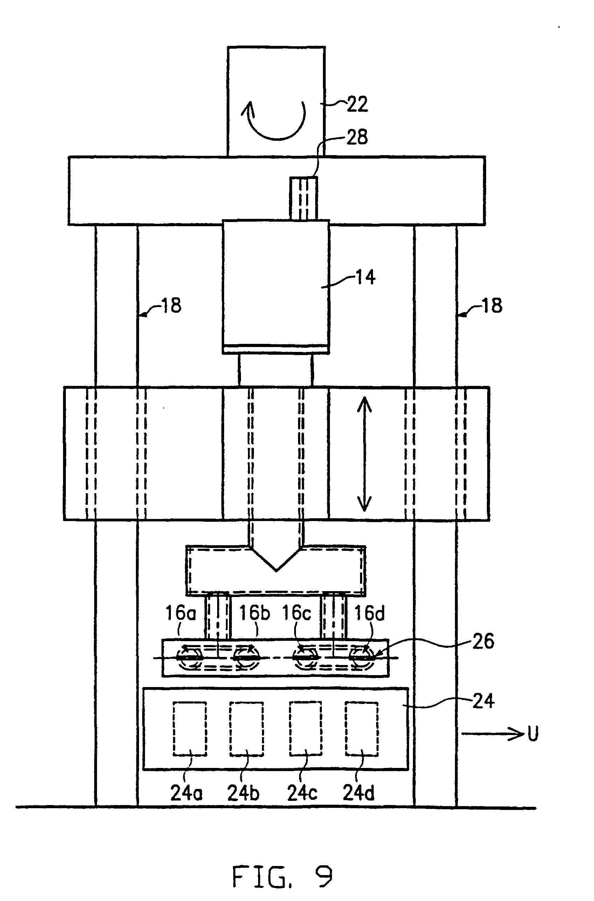

In den Figuren 8 und 9 sind die wesentlichen Bestandteile eines Ausführungsbeispiels einer Heizeinrichtung der erfindungsgemäßen Vorrichtung in einer Seitenansicht (Fig.8) und einer Draufsicht (Fig. 9) gezeigt. Die Heizeinrichtung besteht im wesentlichen aus einer Baueinheit 12, die einen Heizlüfter 14 sowie mehrere nebeneinander angeordnete Heißgasdüsen 16, die mit dem Heizlüfter 14 kommunizieren, umfaßt. Die Baueinheit 12 ist entlang von sich vertikal erstreckenden Führungen 18 verfahrbar und über eine Spindel 20, die über einen Antriebsmotor 22 angetrieben ist, in Höhenrichtung verstellbar.

Bei dem gezeigten Ausführungsbeispiel ist die Heizeinrichtung Bestandteil einer Vorbereitungsstrecke mit auf einer Kreisbahn umlaufenden Halterung (nicht dargestellt) für Werkzeugteile, von denen lediglich ein Formwerkzeugteil, welches vorliegend durch eine Lochfeldplatte 24 gebildet ist, in den Figuren 6 und 7 dargestellt ist. Die Lochfeldplatte 24 ist bei dem gezeigten Ausführungsbeispiel zur Komplettierung eines Mehrfachformwerkzeuges mit vier identischen, mit einer einzigen Formfülleinrichtung kommunizierenden Formnestern ausgebildet. Das Formwerkzeug kann außerdern als Werkzeug für den Mehrkomponenten-Spritzguß ausgebildet sein und mehrere Gruppen von voneinander abweichenden Formnestern aufweisen, wobei die in den Formnestem der ersten Gruppe hergestellten Bauteile vorzugsweise durch Rotation zusammen mit der entsprechenden Lochfeldplatte 24 jeweils in die Formnester der zweiten Gruppe eingesetzt werden, die ein gegenüber den Formnestem der ersten Gruppe größeres Volumen haben. In den Formnestem der zweiten Gruppe werden die Bauteile dann vorzugsweise mit einer zweiten Komponente, insbesondere einer weichelastischen Kunststoffkomponente umspritzt, um Griffflächen oder elastische Funktionselemente an der Bürste auszubilden. Auch bei der zweiten Gruppe der Formnester bewirkt die Lochfeldplatte 24 eine Abdichtung eines Mehrfachspritzgießwerkzeuges.

Wie in Figur 9 zu erkennen, weist die Lochfeldplatte 24 vier nebeneinander angeordnete Lochfelder 24 a-d auf. Jedem Lochfeld 24 a-d ist eine Heißgasdüse 16 a-d zugeordnet, deren sich in Umlaufrichtung U der Lochfeldplatte 24 erstreckenden Düsenschlitze 26 die gesamte Breite eines Lochfeldes 24 a,b,c,d überdecken.

Zum Ausbilden der Verdickung wird im vorliegenden Fall durch eine Einlaßöffnung 28 kalte Luft in den Heizlüfter 14 eingeleitet und über Strömungskanäle zu den Düsenschlitzen 26 der Heißgasdüsen 16 gefördert. Durch eine entsprechende Steuerung kann zur Verringerung der benötigten Energie die Erwärmung der Luft lediglich dann erfolgen, wenn eine mit Borstenfilamenten bestückte Lochfeldplatte 24 zu der Heizeinrichtung gemäß den Figuren 8 und 9 gelangt ist und die Lochfelder 24 a-d unterhalb der entsprechenden Düsen 16 a-d angeordnet sind. Die vertikal verfahrbare Baueinheit wird ausgehend dann von der in Figur 9 dargestellten Stellung abgesenkt. Die Düsenschlitze 26 überstreichen jeweils die entsprechenden Lochfelder 24 a-d. Bei sich in Absenkrichtung veränderndem Durchmesser der Borstenbündel wird die Absenkgeschwindigkeit für die Baueinheit 12 derart angepaßt, daß die Düsen 16 mit geringerer Geschwindigkeit an Borstenbündeln mit größerem Durchmesser vorbeigeführt werden, als an Borstenbündeln mit kleinerem Durchmesser. Dementsprechend wird bei einer Lochfeldplatte mit Kanälen unterschiedlicher Durchmesser die Heißgasdüse nicht mit einer kontinuierlichen Geschwindigkeit quer zur Umlaufrichtung U abgesenkt, sondern mit einer an den jeweiligen Kanaldurchmesser individuell angepaßten Geschwindigkeit.

Nach vollständigem Überstreichen der Lochfelder 24 a-d durch die Heißgasdüsen 16 a-d sind an sämtlichen Borstenbündeln Verdickungen ausgebildet worden, wie dies vorstehend unter Bezugnahme auf die Figuren 1 bis 4 ausführlicher erläutert worden ist. Nach Abschalten des Heizlüfters 14 können dann die Düsen 16 in ihre in Figur 9 dargestellte Ausgangslage zurückgefahren und eine weitere, mit Borstenfilamenten besetzte Lochfeldplatte 24 der Heizeinrichtung durch Verfahren der Halterungen in Umlaufrichtung U zugeführt werden. Die Lochfeldplatte 24 mit den die Verdickung aufweisenden Borstenbündeln wird an einer späteren Station aus der Halterung der Vorbereitungsstrecke entnommen und zur Komplettierung eines Mehrfachwerkzeuges (nicht dargestellt) in dieses eingesetzt.

Zur Verringerung der Zykluszeit zwischen zwei aufeinanderfolgenden Anschmelzvorgängen kann es zu bevorzugen sein, als Ausgangslage für das Anschmelzen der in der nächsten Lochfeldplatte 24 enthaltenen Borstenfilamente die Endlage der vorherigen Bearbeitung zu wählen. Bei einer derartigen Verfahrensführung erfolgt die Bewegung der Baueinheit 12 ausschließlich im Rahmen eines Anschmelzvorgangs an einer Lochfeldplatte 24.

## Patentansprüche

1. Verfahren zur Herstellung von einen Bürstenkörper und mindestens ein aus mehreren gereckten Borstenfilamenten (6) zusammengesetztes Borstenbündel (8) aufweisenden Bürsten, insbesondere Zahnbürsten,
bei dem das Borstenbündel in einen an einem Formwerkzeugteil (2) ausgebildeten Kanal (4) eingeführt und an seinem befestigungsseitigen Ende zur Ausbildung einer Verdickung (10) angeschmolzen wird,
das Formwerkzeug (2, 12) geschlossen und mit fließfähiger Masse gefüllt wird,
**dadurch gekennzeichnet,**
**daß** zumindest ein beim Anschmelzen des Borstenbündels entstehender geschwächter Längenbereich (Z) der Borstenfilamente (6) vollständig von der Verdickung (10) umgeben wird.

2. Verfahren nach Anspruch 1, **dadurch gekennzeichnet, daß** zum Ausbilden der Verdickung (10) heißes Gas gegen die Stirnseite des Borstenbündels (8) derart geblasen wird, daß die sich an der Stirnseite des Borstenbündels (8) bildende Schmelze durch das strömende Gas über den Umfang des nicht angeschmolzenen Borstenbündels (8) getrieben wird und, daß die gebildete Schmelze einen nicht aufgeschmolzenen Längenbereich des Borstenbündels (8) umgebend erstarrt.

3. Verfahren nach Anspruch 2, **dadurch gekennzeichnet, daß** das heiße Gas gegen die Stirnseite des Borstenbündels (8) geblasen wird.

4. Verfahren nach einem der vorherigen Ansprüche, **dadurch gekennzeichnet, daß** das heiße Gas ein Inertgas ist.

5. Verfahren nach einem der vorherigen Ansprüche, **dadurch gekennzeichnet, daß** das Borstenbündel (8) von einer das heiße Gas abgebenden Düse (16) angestrahlt wird, deren effektiver Durchmesser dem 2 bis 20, vorzugsweise dem 5 bis 10-fachen des Bündetdurchmessers entspricht.

6. Verfahren nach einem der vorherigen Ansprüche, **dadurch gekennzeichnet, daß** bei einem mehrere Borstenbündel aufweisenden Formwerkzeug (2, 12) jedes einzelne Borstenbündel (8) eines Borstenfeldes individuell mit heißem Gas angestrahlt wird.

7. Verfahren nach Anspruch 6, **dadurch gekennzeichnet, daß** die Verweilzeit der Heißgasbeaufschlagung in Abhängigkeit von dem Durchmesser der Borstenbündel (8) verändert wird, wobei Borstenbündel (8) mit größerem Durchmesser länger als Borstenbündel (8) mit kleinem Durchmesser mit Heißgas beaufschlagt werden.

8. Verfahren nach einem der vorherigen Ansprüche, **dadurch gekennzeichnet, daß** das befestigungsseitige Ende des Borstenbündels (8) mit Abstand zu dem Formwerkzeugteil (2) angeordnet wird und daß die Verdickung (10) ohne Abstand zu dem Kanal ausgebildet wird.

9. Verfahren nach einem der vorherigen Ansprüche, **dadurch gekennzeichnet, daß** die die Verdickung (10) bildende Schmelze an das Formwerkzeugteil (2) angelegt wird.

10. Verfahren nach einem der vorherigen Ansprüche, **dadurch gekennzeichnet, daß** das Borstenbündel (8) nach Ausbildung der Verdickung (10) axial in dem Kanal (4) verschoben wird, so daß die fertige Verdickung (10) mit größerem Abstand zu der Mündung des Kanals (4) angeordnet wird.

11. Verfahren nach einem der Ansprüche 2 bis 10, **dadurch gekennzeichnet, daß** das Formwerkzeugteil (24) zur Ausbildung der Verdickung (10) an einer Heißgas abströmenden Heizvorrichtung vorbeigeführt und zur Ergänzung des Formwerkzeuges dichtend in dieses eingebaut wird.

12. Verfahren nach Anspruch 11, **dadurch gekennzeichnet, daß** das Formwerkzeugteil (24) auf dem Weg zu oder von dem Formwerkzeug (12) gekühlt wird.

13. Vorrichtung zur Herstellung von Bürsten, insbesondere Zahnbürsten, mit einem einen Kanal zur Halterung eines Borstenbündels aufweisenden Formwerkzeugteils als Bestandteil eines Formwerkzeuges,
einer mit dem Formwerkzeugteil kommunizierenden Formfülleinrichtung und einer dem Formwerkzeugteil zugeordneten Heizeinrichtung zum Anschmelzen eines Endes des Borstenbündel, welche zumindest eine auf das Formwerkzeugteil gerichtete Heißgasdüse umfasst,
**dadurch gekennzeichnet,**
**dass** eine Vorbereitungsstrecke mit auf einer Kreisbahn umlaufenden und an der Heizeinrichtung (14, 16) vorbeigeführten Aufnahmen zur Halterung von Formwerkzeugteilen (24) vorgesehen ist.

14. Vorrichtung nach Anspruch 13, **dadurch gekennzeichnet, daß** die Heißgasdüse (16) in einer Richtung quer zu der Längserstreckung des Borstenbündels verfahrbar ist.

15. Vorrichtung nach Anspruch 13 oder 14, **dadurch gekennzeichnet, daß** das Formwerkzeug ein Mehrfachwerkzeug mit zumindest einem Satz von mehreren mit einer einzigen Formfülleinrichtung kommunizierenden Formnestem ist, denen jeweils ein in dem Formwerkzeugteil (24) ausgebildetes, eine Mehrzahl von Kanälen aufweisendes Lochfeld (24 a-d) zugeordnet ist.

16. Vorrichtung nach einem vorherigen Ansprüche 13 bis 15, **dadurch gekennzeichnet, daß** eine Vorbereitungsstrecke mit auf einer Kreisbahn umlaufenden und an der Heizeinrichtung (14, 16) vorbeigeführten Aufnahmen zur Halterung von Formwerkzeugteilen (24) vorgesehen ist.

17. Vorrichtung nach einem vorherigen Ansprüche 13 bis 16, **dadurch gekennzeichnet, daß** die Heißgasdüse (16) senkrecht zur Umlaufrichtung (U) der Aufnahmen verfahrbar ist.

18. Vorrichtung nach einem der vorherigen Ansprüche 13 bis 17, **dadurch gekennzeichnet, daß** die Heizeinrichtung mehrere Heißgasdüsen (16 a-d) umfaßt und daß jeweils einem Lochfeld (24a; 24b; 24c; 24d) eine Heißgasdüse (16a; 16b; 16c; 16d) zugeordnet ist.

19. Vorrichtung nach Anspruch 18, **dadurch gekennzeichnet, daß** sämtliche Heißgasdüsen in Umlaufrichtung (U) auf einer Höhe angeordnet sind und daß in dem Formwerkzeugteil identische Lochfelder (24 a-d) ausgebildet sind.

20. Vorrichtung nach Anspruch 18 oder 19, **dadurch gekennzeichnet, daß** sämtliche Heißgasdüsen (16) mit einer Wärmequelle (14) kommunizieren.

21. Vorrichtung nach Anspruch 20, **dadurch gekennzeichnet, daß** die Wärmequelle einen Heizlüfter (14) umfaßt.

22. Vorrichtung nach einem der vorherigen Ansprüche 13 bis 21, **dadurch gekennzeichnet, daß** die Wärmequelle (14) und die mindestens eine Heißgasdüse (16) Bestandteil einer vertikal verfahrbaren Baueinheit (12) sind.

## Claims

1. A method of producing brushes, especially toothbrushes, which comprise a brush body and at least one bristle bundle (8) composed of a plurality of oriented bristle filaments (6).
wherein said bristle bundle is introduced in a channel (4), which is formed on a moulding tool component (2), and partially melted at its fixing-side end so as to form an enlargement (10),
the moulding tool (2, 12) is closed and filled with a flowable material,
**characterized in**
**that** at least a weakened longitudinal area (Z) of the bristle filaments (6), which is created when the bristle bundle is partially melted, is completely surrounded by the enlargement (10).

2. A method according to claim 1, **characterized in that,** for forming the enlargement (10), hot gas is blown against the end face of the bristle bundle (8) such that the melt forming on said end face of the bristle bundle (8) is driven, by means of the flow of gas, over the circumference of the non-melted bristle bundle (8), and that the melt formed solidifies such that it encompasses a non-melted longitudinal area of the bristle bundle (8).

3. A method according to claim 2, **characterized in that** the hot gas is blown against the end face of the bristle bundle (8).

4. A method according to one of the preceding claims, **characterized in that** the hot gas is an inert gas.

5. A method according to one of the preceding claims, **characterized in that** the bristle bundle (8) has the hot gas applied thereto by means of a hot-gas supplying nozzle (16) whose effective diameter corresponds to 2 to 20 times, preferably 5 to 10 times, the diameter of the bundle.

6. A method according to one of the preceding claims, **characterized in that** in cases in which the moulding tool (2 , 12) is provided with a plurality of bristle bundles, each individual bristle bundle (8) of a bristle area has applied thereto hot gas.

7. A method according to claim 6, **characterized in that** the period of time for which hot gas is applied to the bristle bundles is varied in dependence upon the diameter of the bristle bundles (8), bristle bundles (8) having a larger diameter being acted upon by hot gas for a longer period of time than bristle bundles (8) having a small diameter.

8. A method according to one of the preceding claims, **characterized in that** the fixing-side end of the bristle bundle (8) is arranged in spaced relationship with the moulding tool component (2) and that the enlargement (10) is formed without there being any distance to the channel.

9. A method according to one of the preceding claims, **characterized in that** the melt forming the enlargement (10) is brought into contact with the moulding tool component (2).

10. A method according to one of the preceding claims, **characterized in that**, when the enlargement (10) has been formed, the bristle bundle (8) is axially displaced in the channel (4) so that the finished enlargement (10) is arranged at a larger distance from the outlet opening of the channel (4).

11. A method according to one of the claims 2 to 10, **characterized in that**, for forming the enlargement (10), the moulding tool component (24) is moved past a heating device giving off hot gas and that said moulding tool component is sealingly installed in the moulding tool so as to complete the same.

12. A method according to claim 11, **characterized in that** the moulding tool component (24) is cooled while being moved either towards or away from the moulding tool (12).

13. A device for producing brushes, especially toothbrushes, comprising
a moulding tool component which is a constituent part of a moulding tool and which is provided with a channel for holding a bristle bundle,
a mould filling means communicating with the moulding tool component and
a heating means associated with the moulding tool component and used for partially melting one end of the bristle bundle, said heating device comprising at least one hot-gas nozzle which is directed towards the moulding tool component,
**characterized in**
**that** a preparation path is provided, which is equipped with reception means that circulate on a circular path, said reception means being used for holding moulding tool components (24) and being moved past the heating means (14, 16).

14. A device according to claim 13, **characterized in that** the hot-gas nozzle (16) is displaceable in a direction transversely to the longitudinal direction of the bristle bundle.

15. A device according to claim 13 or 14, **characterized in that** the moulding tool is a multicavity moulding tool comprising at least one set of a plurality of mould cavities communicating with a single mould filling means and having each associated therewith a field of perforations (24 a-d) which is formed in said moulding tool component (24) and which comprises a plurality of channels.

16. A device according to one of the preceding claims 13 to 15, **characterized in that**
a preparation path is provided, which is equipped with reception means that circulate on a circular path, said reception means being used for holding moulding tool components (24) and being moved past the heating means (14, 16).

17. A device according to one of the preceding claims 13 to 16, **characterized in that** the hot-gas nozzle (16) is displaceable at right angles to the direction of circulation (U) of the reception means.

18. A device according to one of the preceding claims 13 to 17, **characterized in that** the heating means comprises a plurality of hot-gas nozzles (16a-d) and that each field of perforations (24a; 24b; 24c; 24d) has associated therewith a hot-gas nozzle (16a; 16b; 16c; 16d).

19. A device according to claim 18, **characterized in that** all the hot-gas nozzles are arranged on one level in the direction of circulation (U) and that the moulding tool component has formed therein identical fields of perforations (24 a-d).

20. A device according to claim 18 or 19, **characterized in that** all the hot-gas nozzles (16) communicate with one heat source (14).

21. A device according to claim 20, **characterized in that** the heat source comprises a fan heater (14).

22. A device according to one of the preceding claims 13 to 21, **characterized in that** the heat source (14) and the at least one hot-gas nozzle (16) are constituent parts of a vertically displaceable structural unit (12).

## Revendications

1. Procédé pour fabriquer des brosses, en particulier des brosses à dents, comprenant un corps de brosse et au moins un faisceau de poils (8) composé de plusieurs filaments étirés (6), selon lequel on introduit le faisceau de poils dans un conduit (4) formé sur une partie de moule (2) et on le fait fondre à son extrémité située côté fixation pour former un épaississement (10), on ferme le moule (2, 12) et on le remplit avec une masse fluide,
**caractérisé en ce qu'**au moins une zone longitudinale affaiblie (Z) des filaments de poils (6), formée lors de la fusion du faisceau de poils, est complètement entourée par l'épaississement (10).

2. Procédé selon la revendication 1, **caractérisé en ce que** pour former l'épaississement (10), on injecte un gaz chaud vers le côté frontal du faisceau de poils (8) de telle sorte que la matière fondue qui se forme sur le côté frontal dudit faisceau (8) soit amenée, par le gaz qui s'écoule, sur la circonférence du faisceau (8) non fondu, et **en ce que** la matière fondue formée se solidifie en entourant une zone longitudinale non fondue du faisceau de poils (8).

3. Procédé selon la revendication 2, **caractérisé en ce que** le gaz chaud est injecté vers le côté frontal du faisceau de poils (8).

4. Procédé selon l'une des revendications précédentes, **caractérisé en ce que** le gaz chaud est un gaz inerte.

5. Procédé selon l'une des revendications précédentes, **caractérisé en ce que** le faisceau de poils (8) est soumis à une projection par un injecteur (16) émettant le gaz chaud dont le diamètre réel est 2 à 20 fois, de préférence 5 à 10 supérieur au diamètre des faisceaux.

6. Procédé selon l'une des revendications précédentes, **caractérisé en ce qu'**avec un moule (2, 12) présentant plusieurs faisceaux de poils, chaque faisceau individuel (8) d'une zone de poils est soumis individuellement à une projection de gaz chaud.

7. Procédé selon la revendication 6, **caractérisé en ce que** le temps de séjour pour la sollicitation par le gaz chaud est modifié en fonction du diamètre des faisceaux de poils (8), les faisceaux (8) avec un grand diamètre étant sollicités plus longtemps par le gaz chaud que les faisceaux (8) avec un petit diamètre.

8. Procédé selon l'une des revendications précédentes, **caractérisé en ce que** l'extrémité du faisceau de poils (8) située côté fixation est disposée à une certaine distance de la partie de moule (2), et **en ce que** l'épaississement (10) est formé sans espacement par rapport au conduit.

9. Procédé selon l'une des revendications précédentes, **caractérisé en ce que** la matière fondue qui forme l'épaississement (10) est appliquée contre la partie de moule (2).

10. Procédé selon l'une des revendications précédentes, **caractérisé en ce que** le faisceau de poils (8), après la formation de l'épaississement (10), est déplacé axialement dans le conduit (4), de sorte que l'épaississement fini (10) est disposé à une assez grande distance de l'entrée du conduit (4).

11. Procédé selon l'une des revendications 2 à 10, **caractérisé en ce que** pour former l'épaississement (10), on fait passer la partie de moule (24) devant un dispositif de chauffage qui émet un gaz chaud, et on monte cette partie de moule de manière étanche dans le moule, pour compléter ce dernier.

12. Procédé selon la revendication 11, **caractérisé en ce que** la partie de moule (24) est refroidie en allant vers le moule (12) ou en revenant de celui-ci.

13. Dispositif pour fabriquer des brosses, en particulier des brosses à dents, comprenant une partie de moule qui fait partie d'un moule et qui comporte un conduit pour fixer un faisceau de poils, un dispositif de remplissage de moule qui communique avec ladite partie de moule, et un dispositif de chauffage pour faire fondre une extrémité du faisceau de poils, qui est associé à la partie de moule et qui comprend au moins un injecteur de gaz chaud dirigé vers ladite partie de moule,
**caractérisé en ce qu'**il est prévu un tronçon de préparation avec des logements qui sont destinés à recevoir des parties de moule (24), qui circulent sur une trajectoire circulaire et qui passent devant le dispositif de chauffage (14, 16).

14. Dispositif selon la revendication 13, **caractérisé en ce que** l'injecteur de gaz chaud (16) est mobile dans un sens transversal par rapport à l'extension longitudinale du faisceau de poils.

15. Dispositif selon la revendication 13 ou 14, **caractérisé en ce que** le moule est un moule multiple avec au moins une série de plusieurs empreintes qui communiquent avec un seul dispositif de remplissage de moule et à chacune desquelles est associée une zone perforée (24 a-d) formée dans la partie de moule (24) et présentant plusieurs conduits.

16. Dispositif selon l'une des revendications 13 à 15, **caractérisé en ce qu'**il est prévu un tronçon de préparation avec des logements qui sont destinés à recevoir des parties de moule (24), qui circulent sur une trajectoire circulaire et qui passent devant le dispositif de chauffage (14, 16).

17. Dispositif selon l'une des revendications 13 à 16, **caractérisé en ce que** l'injecteur de gaz chaud (16) est mobile perpendiculairement par rapport au sens circonférentiel (U) des logements.

18. Dispositif selon l'une des revendications précédentes 13 à 17, **caractérisé en ce que** le dispositif de chauffage comprend plusieurs injecteurs de gaz chaud (16 ad) et **en ce qu'**un injecteur de gaz chaud (16a ; 16b ; 16c ; 16d) est associé à une zone perforée respective (24a ; 24b ; 24c ; 24d).

19. Dispositif selon la revendication 18, **caractérisé en ce que** tous les injecteurs de gaz chaud sont disposés à la même hauteur dans le sens circonférentiel (U) et **en ce que** des zones perforées identiques (24 a-d) sont formées dans la partie de moule.

20. Dispositif selon la revendication 18 ou 19, **caractérisé en ce que** tous les injecteurs de gaz chaud (16) communiquent avec une source de chaleur (14).

21. Dispositif selon la revendication 20, **caractérisé en ce que** la source de chaleur comprend un radiateur soufflant.

22. Dispositif selon l'une des revendications précédentes 13 à 21, **caractérisé en ce que** la source de chaleur (14) et le ou les injecteurs de gaz chaud (16) font partie d'une unité de construction (12) mobile verticalement.
